# NEUE EUROPÄISCHE PATENTSCHRIFT

(11) **EP 1 341 244 B2**
(45) Veröffentlichungstag und Bekanntmachung des Hinweises auf die Entscheidung über den Einspruch: **29.05.2013**
(45) Hinweis auf die Patenterteilung: 22.03.2006
(21) Anmeldenummer: 02027920.4
(22) Anmeldetag: 13.12.2002
(51) Int. Cl.: H01M 2/04

(54) **Akkumulator mit einem zweiteiligen Deckel**
Battery with a two parts-cover
Batterie avec un couvercle en deux parties

(30) Priorität: 17.12.2001 DE 10161895
(43) Veröffentlichungstag der Anmeldung: 03.09.2003
(73) Patentinhaber: Akkumulatorenfabrik Moll GmbH & Co. KG, 96231 Staffelstein (DE); Banner GmbH, 4021 Linz (AT)
(72) Erfinder: Gelbke, Manfred, Dr., 96231 Bad Staffelstein (DE); Kermas, Richard, 96231 Bad Staffelstein (DE); Schumann, Peter, 96253 Untersiemau (DE); Holzleitner, Peter, A-4020 Linz (AT); Maleschitz, Norbert, A-4609 Thalheim bei Wels (AT); Bawart, Thomas, A-4020 Linz (AT)
(74) Vertreter: Naumann, Ulrich

(56) Entgegenhaltungen:
- EP-A- 0 107 469
- EP-A- 0 763 862
- EP-A1- 0 462 403
- EP-A1- 0 503 264
- EP-A1- 0 570 703
- EP-A1- 0 584 490
- EP-A1- 1 017 119
- EP-A2- 0 178 422
- DE-A- 19 532 934
- DE-A1- 4 226 809
- DE-A1- 10 023 747
- DE-C1- 4 440 852
- DE-U1- 9 101 356
- DE-U1- 29 821 994
- US-A- 4 275 128
- US-A- 4 278 742
- US-B1- 6 277 517

## Beschreibung

Die Erfindung betrifft einen Akkumulator, insbesondere einen Bleiakkumulator, nach dem Oberbegriff des Anspruchs 1.

Derartige Akkumulatoren werden für verschiedene Einsatzzwecke verwendet, unter anderem als Starterbatterien für Kraftfahrzeuge. Der Akkumulator ist mit einer Säure oder einer anderen elektrolytischen Flüssigkeit gefüllt. Im normalen Betriebszustand befindet sich der Akkumulator in waagerechter Lage, so daß die Säure nicht auslaufen kann. Bei einem Unfall kann es vorkommen, daß der Akkumulator gekippt wird, so daß die Gefahr besteht, daß die Säure ausläuft und Schäden verursacht.

Aus der EP 0 570 703 A1 ist ein Akkumulator nach dem Oberbegriff des Anspruchs 1 bekannt, der eine gewisse Kippsicherheit aufweist. Bei diesem Akkumulator sind Verschlußstopfen für die Einfüllöffnungen vorhanden. Die Einfüllöffnungen weisen halbkreisförmige Erweiterungen auf, durch die Entgasungskanäle und Gasaustrittsstellen gebildet werden, deren Größe so bemessen ist, daß bei kurzzeitiger Kippung nicht mehr Säure aus dem Gasraum der Zelle austreten kann, als von dem ihr zugeordneten Hohlraum aufgenommen wird. Es ist allerdings erforderlich, diese Erweiterungen mit einer sehr hohen Genauigkeit herzustellen. Das zur Herstellung der Deckelteile erforderliche Werkzeug muß dementsprechend mit einer sehr hohen Genauigkeit gefertigt werden.

Die EP-A-0 763 862 offenbart einen Akkumulator nach dem Oberbegriff des Anspruchs 1. Für jede Zelle ist ein Einfüllöffnung und eine im Abstand davon vorgesehene Gasaustrittsstelle vorhanden, durch die Säure in die Zelle zurückfließen kann. Diese Konstruktion ist jedoch nur geeignet, den Säureauslauf bei Kippung in die Seitenlage zu verhindem.

Aufgabe der Erfindung ist es, einen verbesserten kippsicheren Akkumulator der eingangs angegebenen Art vorzuschlagen.

Aus der DE19532934 ist ein Akkumulator mit Siphonsystem bekannt, bei dem eine Dichtigkeitsprüfung je Zelle möglich ist. Aufgrund des Siphonsystems bleibt jedoch der durch die Deckelteile gebildete Hohlraum weitestgehend unberücksichtigt, lässt sich nämlich allenfalls mit großem Aufwand auf Dichtigkeit prüfen.

Erfindungsgemäß wird diese Aufgabe durch die kennzeichnenden Merkmale des Anspruchs 1 gelöst. In dem Unterdeckel ist für jede Zelle eine in den zugehörigen Hohlraum mündende Gasaustrittsstelle im Abstand von der Einfüllöffnung vorgesehen. Die Gasaustrittsstelle ist also nicht Bestandteil der Einfüllöffnung, sondern von dieser beabstandet. Dabei ist die Größe der Gasaustrittsstelle so bemessen, daß bei kurzzeitiger Kippung des Akkumulators nicht mehr Säure aus der Zelle austreten kann, als von dem ihr zugeordneten Hohlraum aufgenommen wird.

Dadurch, daß die Gasaustrittsstelle nicht Bestandteil der Einfüllöffnung ist, wird die Herstellung vereinfacht. Die Einfüllöffnungen können auf herkömmliche Weise her gestellt und verschlossen werden, und zwar durch Verschlußstopfen, die als Ansätze an dem Oberdeckel ausgestaltet sein können oder als gesonderte Verschlußstopfen. Es ist lediglich erforderlich, die Toleranzen für die Herstellung der Gasaustrittsstelle einzuhalten, ohne daß dabei das Zusammenwirken mit weiteren Bestandteilen, insbesondere mit den Toleranzen der Verschlußstopfen, berücksichtigt werden muß.

Die Größe der jeweiligen Gasaustrittsstelle ist derart bemessen, daß bei einer Kippung des Akkumulators keine Luft durch die Gasaustrittsstelle in die Zelle gelangen kann. Die Gasaustrittsstelle ist also höchstens so groß, daß beim Ausströmen der Säure keine Luft einströmen kann. Sie wird allerdings so groß bemessen, daß die Säure nach Beendigung der Kippung, also dann, wenn der Akkumulator wieder seine Normallage eingenommen hat, in die Zelle zurücklaufen kann. Dadurch, daß dann, wenn die Säure durch die Gasaustrittsstelle strömt, nicht gleichzeitig Luft durch diese Gasaustrittsstelle in die Zelle einströmen kann, wird gewährleistet, daß sich mit zunehmendem Ausfließen der Säure aus der Zelle in dieser Zelle ein Unterdruck bildet, der mit weiterem Ausfließen der Säure größer wird und der ein weiteres Ausfließen der Säure spätestens dann verhindert, wenn der jeweilige Hohlraum gefüllt ist. Der Hohlraum ist derart bemessen, daß diese Bedingung eingehalten wird.

Jeder Hohlraum umfaβt einen ersten Bereich und einen zweiten Bereich, die jeweils mit einem Bereich der Einfüllöffnung verbunden sind. Im Bereich der Einfüllöffnung ist ein Strömungsweg ausgebildet, der die beiden Bereiche miteinander verbindet. Die Einfüllöffnungen sind durch Verschlußstopfen verschlossen, wobei die Verschlußstopfen sowohl gegenüber dem Unterdeckel als auch gegenüber dem Oberdeckel abgedichtet sind. Im Bereich zwischen den Dichtungen ist ein Strömungsweg vorhanden, beispielsweise dadurch, daß in diesem Bereich der Durchmesser des Verschlußstopfens bzw. Ansatzes verringert ist, so daß ein Ringraum gebildet wird, der Bestandteil des Strömungsweges ist. Auf diese Weise können die jeweiligen Hohlräume im Blockdeckel aus jeweils zwei Bereichen bestehen, die durch die jeweilige Einfüllöffnung verbunden sind.

Eine vorteilhafte Weiterbildung ist dadurch gekennzeichnet, daß eine Einfüllöffnung mit einer Diagnose-Sonde ("Magic eye") versehen ist, insbesondere mit einer Diagnose-Sonde nach der DE 298 21 994 U, die einen Sonden-Körper aufweist, an dem eine Linse mit mindestens einer Schwirnmerkugel, ein Gewinde und ein Einschraubkopf vorgesehen sind. Die Diagnose-Sonde dient zur Überwachung des Säurestandes in der Batterie. Sie kann in den Unterdeckel geschraubt oder gesteckt werden. Vorteilhaft ist es, wenn der Oberdeckel vollständig oder zumindest in dem Bereich, in dem sich die Diagnose-Sonde befindet, aus durchsichtigem Werkstoff besteht.

Der Oberdeckel kann mit dem Unterdeckel unlösbar verbunden, insbesondere verschweißt, sein.

Es ist allerdings auch möglich, daß der Oberdeckel mit dem Unterdeckel lösbar verbindbar oder lösbar verbunden ist, insbesondere an dem Unterdeckel festgeklipst oder mit diesem verschraubt ist.

Der Oberdeckel kann mit einer elastischen Dichtkontur ausgestattet sein. Dies ist insbesondere dann von Vorteil, wenn der Oberdeckel als 2K-Teil ausgebildet ist und/oder mit dem Unterdeckel lösbar verbunden, insbesondere an dem Unterdeckel festgeklipst oder mit diesem verschraubt ist.

Der Unterdeckel kann eine rinnenförmige Kontur zur Abdichtung des Oberdeckels aufweisen. Dies ist insbesondere von Vorteil, wenn der Oberdeckel mit dem Unterdeckel lösbar verbindbar ist, insbesondere an dem Unterdeckel festgeklipst oder mit diesem verschraubt ist.

Die Einfüllöffnungen sind durch jeweils einen Verschlußstopfen verschlossen oder verschließbar.

Die Verschlußstopfen weisen eine erste Dichtung gegenüber dem Oberdeckel und eine zweite Dichtung gegenüber dem Unterdeckel auf.

Vorzugsweise sind die Verschlußstopfen aus 2-Komponenten-Kunststoff hergestellt, also als sogenanntes 2K-Teil ausgebildet.

Zwischen den Verschlußstopfen und den sie aufnehmenden Einfüllöffnungen ist ein tangentialer Gas-Strömungsweg vorhanden. Hierzu können die Verschlußstopfen im Bereich zwischen den Dichtungen einen verminderten Querschnitt oder Durchmesser aufweisen, so daß ein Ringraum zur Einfüllöffnung gebildet wird, der Bestandteil des Gas-Strömungswegs ist.

Die Gasaustrittsstellen können einen kreisförmigen Querschnitt aufweisen. Um zu gewährleisten, daß bei kurzzeitiger Kippung des Akkumulators nicht mehr Säure aus der Zelle austreten kann, als von dem ihr zugeordneten Hohlraum aufgenommen wird, kann der Durchmesser der jeweiligen Gasaustrittsstelle 2 bis 4 mm betragen, vorzugsweise 3 mm.

Die Gasaustrittsstellen können trichterförmig ausgestaltet sein. Hierdurch kann der Rückfluß der Säure verbessert werden.

Eine weitere vorteilhafte Weiterbildung ist dadurch gekennzeichnet, daß die Hohlräume durch Wände in eine oder mehrere Kammern untergliedert sind. Vorteilhaft ist es, wenn die Kammern labyrinthartig ausgestaltet sind. Die Kammern sind also vorzugsweise derart ausgestaltet, daß ein Labyrinthsystem entsteht. Hierdurch kann erreicht werden, daß der jeweilige Hohlraum, insbesondere auch bei verschiedenen Kipprichtungen des Akkumulators, vorteilhaft ausgenutzt wird.

Die der Gasaustrittsstelle nächstliegende Wand ist vorzugsweise derart ausgebildet, daß sie eine spiralförmige Kammer umgrenzt. Die Spirale erstreckt sich vorzugsweise über 360° oder mehr, ferner vorzugsweise über 450° oder mehr. Hierdurch wird das Volumen des Hohlraums gut ausgenutzt.

Vorteilhaft ist es, wenn der Austrittsquerschnitt einer oder mehrerer Kammern genauso groß ist wie der Querschnitt der Gasaustrittsstelle. Dies ist insbesondere dann von Vorteil, wenn die Kammern labyrinthartig ausgestaltet sind und/oder wenn eine spiralförmige. Kammer vorhanden ist.

Der Unterdeckel weist vorzugsweise ein zur Gasaustrittsstelle führendes Gefälle auf. Hierdurch kann erreicht werden, daß die bei der Kippung in den Hohlraum eindringene Säure in die Zelle zurückläuft, wenn der Akkumulator wieder seine Normallage einnimmt.

Die Rücklaufflächen im Unterdeckel können ein facettenhaftes und/oder kontinuierliches Gefälle zur Gasaustrittsstelle aufweisen.

Eine vorteilhafte Weiterbildung ist dadurch gekennzeichnet, daß der Unterdeckel im Bereich des Gefälles eine Oberflächenstruktur aufweist, die in Richtung zur Gasaustrittsstelle gerichtet ist.

Die Hohlräume münden in einen zentralen Entgasungskanal, an dessen Ende eine oder mehrere Entgasungsöffnungen vorgesehen sind. Der Entgasungskanal befindet sich vorzugsweise an einer Längsseite des Akkumulators. Die Anordnung ist derart getroffen, daß gewährleistet ist, daß bei einer Kippung des Akkumulators keine Säure bis zum Entgasungskanal vordringen kann.

An dem oder den Enden des zentralen Entgasungskanals können eine oder mehrere, insbesondere zwei, Endkammern vorhanden sein, von denen eine oder mehrere mit einem Rückzündungsschutz, insbesondere einer Rückzündungsschutz-Fritte, ausgestattet sein können.

Eine weitere vorteilhafte Weiterbildung ist dadurch gekennzeichnet, daß der Oberdeckel Wände aufweist, die in Kopflage des Akkumulators Überlaufschwellen bilden. Hierdurch wird die Kippsicherheit auch bei einer Kippung des Akkumulators um 180° verbessert. Die Überlaufschwellen sind so hoch ausgebildet, daß die ausgetretene Säure sie nicht übersteigt.

Nach einer weiteren vorteilhaften Weiterbildung ist der Oberdeckel als ebene Platte ausgestaltet.

Ausführungsbeispiele der Erfindung werden nachstehend anhand der beigefügten Zeichnung im einzelnen erläutert. In der Zeichnung zeigt
- Fig. 1: einen Unterdeckel und einen Oberdeckel in einer perspektivischen Ansicht,
- Fig. 2: den Unterdeckel gemäß Fig. 1 in einer Ansicht von oben,
- Fig. 3: eine Abwandlung des Oberdeckels in einer Ansicht von unten,
- Fig. 4: einen Querschnitt durch einen Blockdeckel im Bereich einer Zelle,
- Fig. 5: eine Abwandlung des Unterdeckels mit einer schematischen Darstellung des Säurestandes in den Hohlräumen bei einer Kippung des Akkumulators nach links,
- Fig. 6: den Unterdeckel gemäß Fig. 5 mit einer schematischen Darstellung des Säurestandes in den Hohlräumen bei einer Kippung des Akkumulators nach rechts,
- Fig. 7: den Unterdeckel gemäß Fig. 5 und 6 mit einer schematischen Darstellung des Säurestandes in den Hohlräumen bei einer Kippung des Akkumulators nach vorne,
- Fig. 8: den Unterdeckel gemäß Fig. 5 bis 7 mit einer schematischen Darstellung des Säurestandes in den Hohlräumen bei einer Kippung des Akkumulators nach hinten,
- Fig. 12: einen Verschlußstopfen in einer Seitenansicht,
- Fig. 13: den Verschlußstopfen gemäß Fig. 12 in einem Querschnitt,
- Fig. 14: den Verschlußstopfen gemäß Fig. 12 und 13 in einer Ansicht von oben,
- Fig. 15: den Verschlußstopfen gemäß Fig. 12 bis 14 innerhalb der zugehörigen Einfüllöffnung in einer Querschnittdarstellung,
- Fig. 16: einen Blockdeckel bei einer Kippung des Akkumulators um 180°, teilweise im Schnitt und
- Fig. 17: einen Blockdeckel, bei dem der Oberdeckel als ebene Platte ausgestaltet ist.

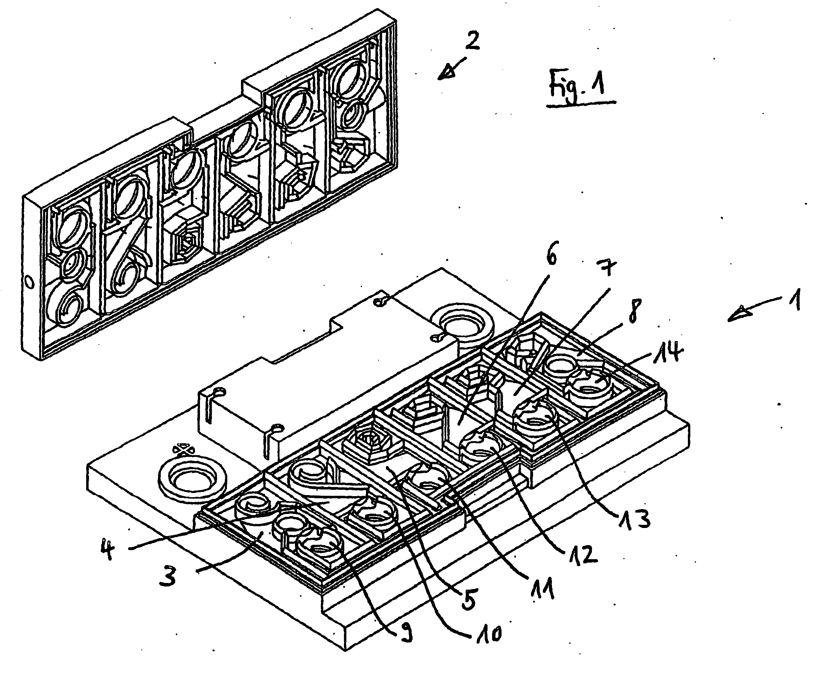

Der in Fig. 1 dargestellte Blockdeckel eines Akkumulators besteht aus einem Unterdeckel 1 und einem Oberdeckei 2, zwischen weichen ein Gasraum zur Säureabscheidung ausgebildet ist, der in sechs Hohlräume 3, 4, 5, 6, 7, 8 unterteilt ist, so daß für jede der sechs Zellen des Akkumulators ein Hohlraum 3 - 8 vorhanden ist. In dem Unterdeckel ist eine Einfüllöffnung 9, 10, 11, 12, 13, 14 für jede Zelle vorgesehen.

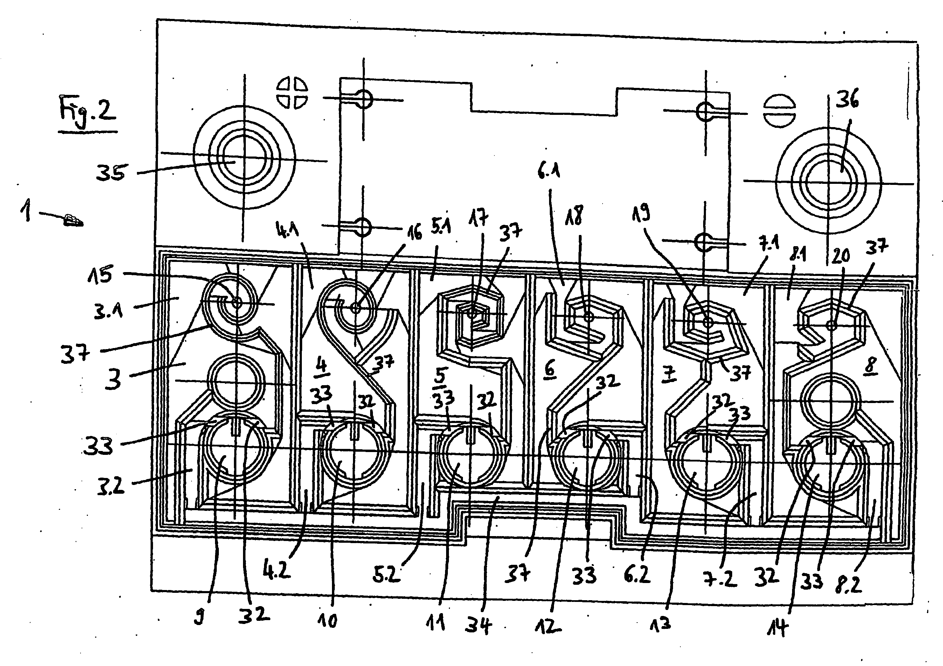

In dem Unterdeckel 1 ist für jede Zelle eine Gasaustrittsstelle 15, 16, 17, 18, 19, 20 vorgesehen, die in den zugehörigen Hohlraum 3 - 8 mündet und deren Größe so bemessen ist, daß bei kurzzeitiger Kippung des Akkumulators nicht mehr Säure aus der Zelle austreten kann, als von dem ihr zugeordneten Hohlraum 3 - 8 aufgenommen wird. Die Gasaustrittsstellen 15 - 20 weisen einen kreisförmigen Querschnitt mit einem Durchmesser von 3 mm auf. Sie sind in Fig. 2 dargestellt, die eine Ansicht des Unterdeckels 1 von oben zeigt.

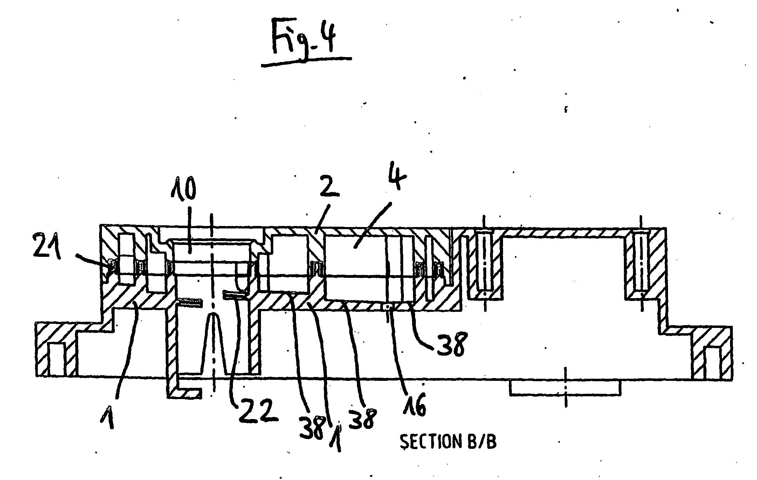

Wie aus Fig. 4 ersichtlich ist der Oberdeckel 2, der aus 2-Komponenten-Kunststoff hergestellt ist, mit einer elastischen Dichtkontur 21 ausgestattet und mit dem Unterdeckel 1 lösbar verbindbar. Der Unterdeckel 1 weist eine rinnenförmige Kontur zur Abdichtung des Oberdeckeis 2 auf.

Die Einfüllöffnungen 9 - 14 sind durch jeweils einen Verschlußstopfen verschließbar. Hierzu ist in jeder Einfüllöffnung und damit auch in der in Fig. 4 im Querschnitt gezeigten Einfüllöffnung 10 ein Gewinde 22 vorhanden, in das ein Verschlußstopfen einschraubbar ist.

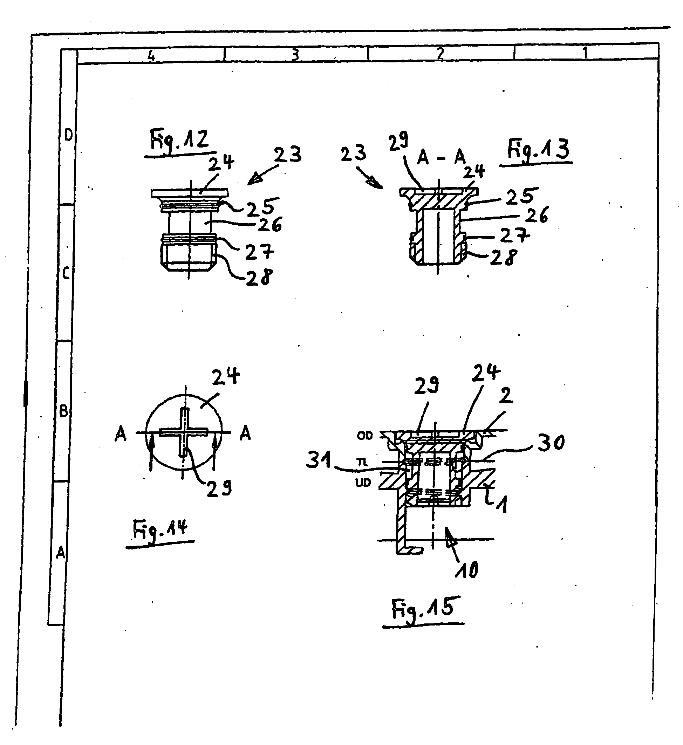

Fig. 12 - 15 zeigen ein Ausführungsbeispiel eines Verschlußstopfens 23, der einen Kopf 24, eine erste Dichtung 25 zur Abdichtung gegenüber dem Oberdeckel 2, einen im Durchmesser geringeren Bereich 26, eine zweite Dichtung 27 zur Abdichtung gegenüber dem Unterdeckel 1 und ein Außengewinde 28 aufweist, mit dem der Verschlußstopfen 23 in das Innengewinde 22 der Einfüllöffnung 10 einschraubbar ist. Im Kopf 24 ist eine kreuzförmige Vertiefung 29 vorhanden, in die ein entsprechendes Werkzeug eingesteckt werden kann, um den Verschlußstopfen 23 einzuschrauben oder herauszuschrauben.

Bei der Ausführungsform, die in Fig. 15 gezeigt ist, sind der Unterdeckel 1 und der Oberdeckel 2 längs der Teilungsebene 30 verschweißt. Die Teilungsebene 30 liegt in dem Bereich 26 des Verschlußstopfens. Zwischen diesem im Durchmesser geringeren Bereich 26 des Verschlußstopfens 23 und der gegenüberliegenden Wandung der Einfüllöffnung 10 wird ein Ringraum 31 gebildet, der von Säureabscheidungsgasen durchströmt werden kann.

Die Hohlräume 3 - 8 umfassen in der aus Fig. 2 ersichtlichen Weise einen ersten Bereich 3.1, 4.1, 5.1, 6.1, 7.1, 8.1 und einen zweiten Bereich 3.2, 4.2, 5.2, 6.2, 7.2, 8.2, die jeweils mit einem Bereich der zugehörigen Einfüllöffnung 9 - 14 verbunden sind, nämlich mit dem Ringraum zwischen dem Verschlußstopfen und der Wandung der Einfüllöffnung, also beispielsweise dem Ringraum 31 in Fig. 15. Dieser Ringraum kann sich über den gesamten Umfangsbereich des Verschlußstopfens erstrecken, also über 360°, er kann sich allerdings auch nur über einen TeilUmfangsbereich erstrecken.

Wie aus Fig. 2 ersichtlich, liegen die Gasaustrittsstellen 15 - 20 in den ersten Bereichen 3.1 - 8.1 der Hohlräume 3 - 8. Sie sind durch Einmündungsstellen 32 mit einem Bereich der zugehörigen Einfüllöffnung 9 -14 verbunden. Die zweiten Bereiche 3.2 - 8.2 der Hohlräume 3 - 8 sind durch jeweils eine Austrittsstelle 33 mit einem Bereich der zugehörigen Einfüllöffnung 9 -14 verbunden. Die zweiten Bereiche 3.2 - 8.2 münden in einen zentralen Entgasungskanal 34, der an einer Längsseite des Akkumulators verläuft, nämlich an derjenigen Längsseite, die den Endpolen 35, 36 gegenüberliegt.

Die Hohlräume 3 - 8 sind durch Wände 37 in Kammern untergliedert, die labyrinthartig ausgestaltet sind. In Fig. 2 sind verschiedene labyrinthartige Ausgestaltungen dargestellt, wobei aus Gründen der vereinfachten zeichnerischen Darstellung in jeder der sechs Hohlräume eine andere Variante dargestellt ist. In der Praxis wird für jeden Hohlraum 3 - 8 dieselbe Form oder eine spiegelsymmetrische Form einer labyrinthartigen Kammer verwendet.

Bei den sechs in der Fig. 2 gezeigten Ausführungsformen sind die der jeweiligen Gasaustrittsstelle 15 - 20 nächstliegenden Wände 37 derart ausgebildet, daß sie eine spiralförmige Kammer umgrenzen, wobei sich die Spirale in den Hohlräumen 3 - 7 über 450° oder mehr erstreckt. In dem Hohlraum 8 erstreckt sich die Spirale über etwas mehr als 360°.

Der Unterdeckel 1 weist in der aus Fig. 4 ersichtlichen Weise ein zur jeweiligen Gasaustrittsstelle 15 - 20 führendes Gefälle auf, in der Fig. 4 also ein Gefälle der Rücklauffläche 38 zur Gasaustrittsstelle 16, das kontinuierlich verläuft. Die Rücklauffläche 38 ist rauh und weist eine Oberflächenstruktur auf, die in Richtung zur Gasaustrittsstelle 16 gerichtet ist und die den Rücklauf der Säure dorthin fördert oder erleichtert.

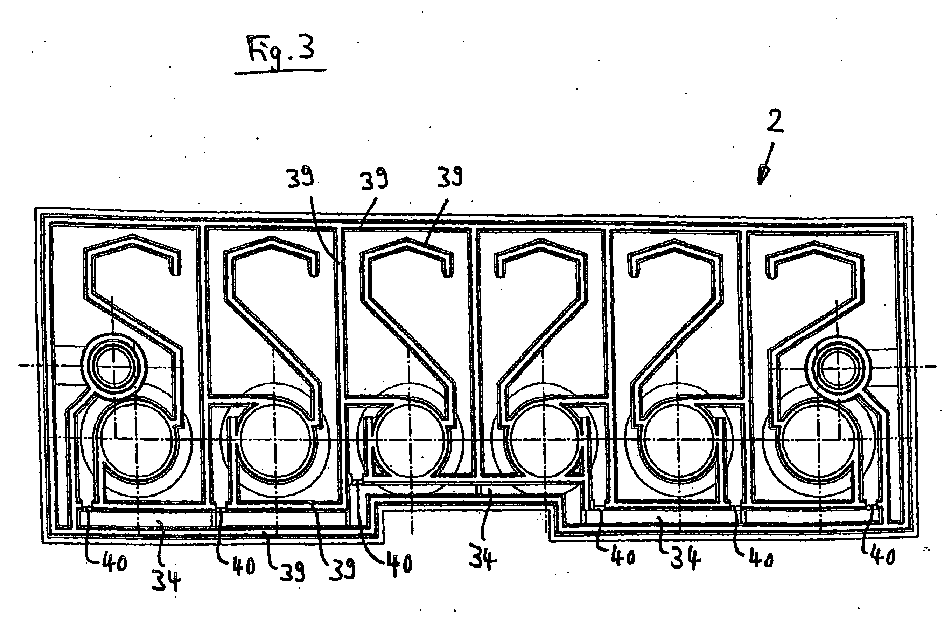

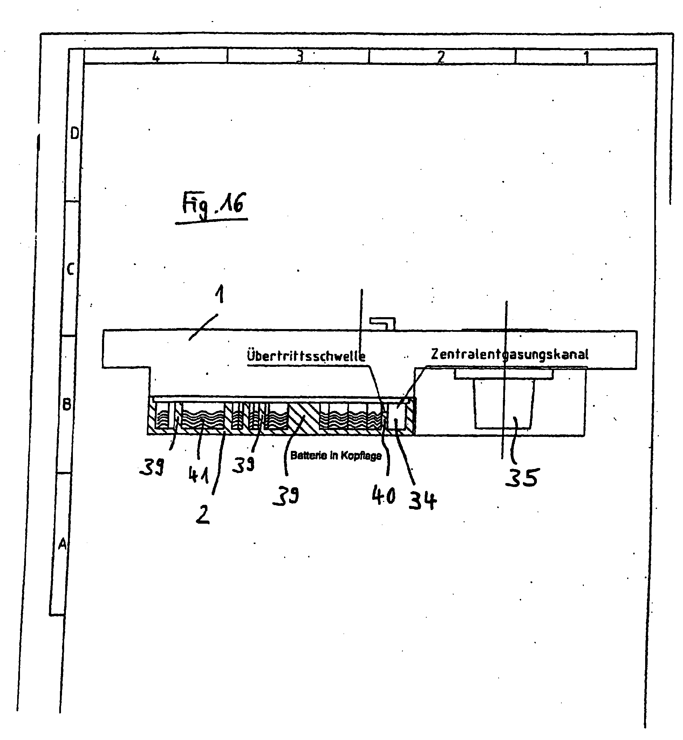

Der Oberdeckel 2 weist Wände 39 (Fig. 3 und Fig. 16) auf, die in Kopflage des Akkumulators Überlaufschwellen bilden. Die Anordnung kann derart getroffen sein, daß die Wände 39 des Oberdeckels 2 an entsprechenden Wänden des Unterdeckels 1 aufliegen und daß zum zentralen Entgasungskanal 34 Übertrittsschwellen 40 vorhanden sind, deren Höhe geringer ist, die aber immer noch so hoch sind, daß auch im Falle einer Kopflage des Akkumulators, die in Fig. 16 gezeigt ist, die in den Hohlräumen vorhandene Säure 41 die Übertrittsschwelle 40 nicht überschreitet und damit keine Säure in den zentralen Entgasunskanal 34 eindringen kann.

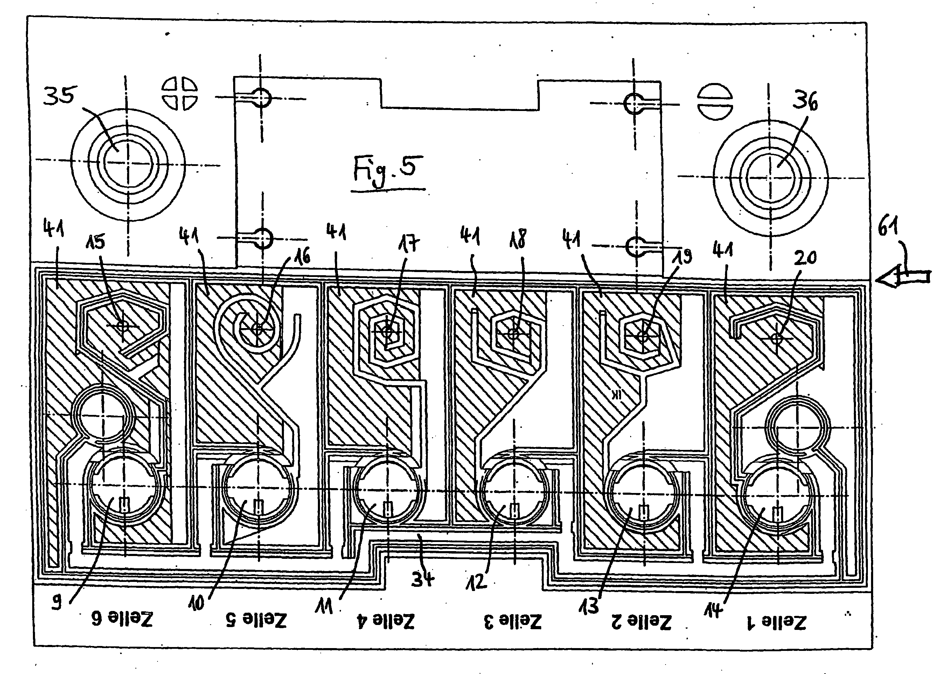

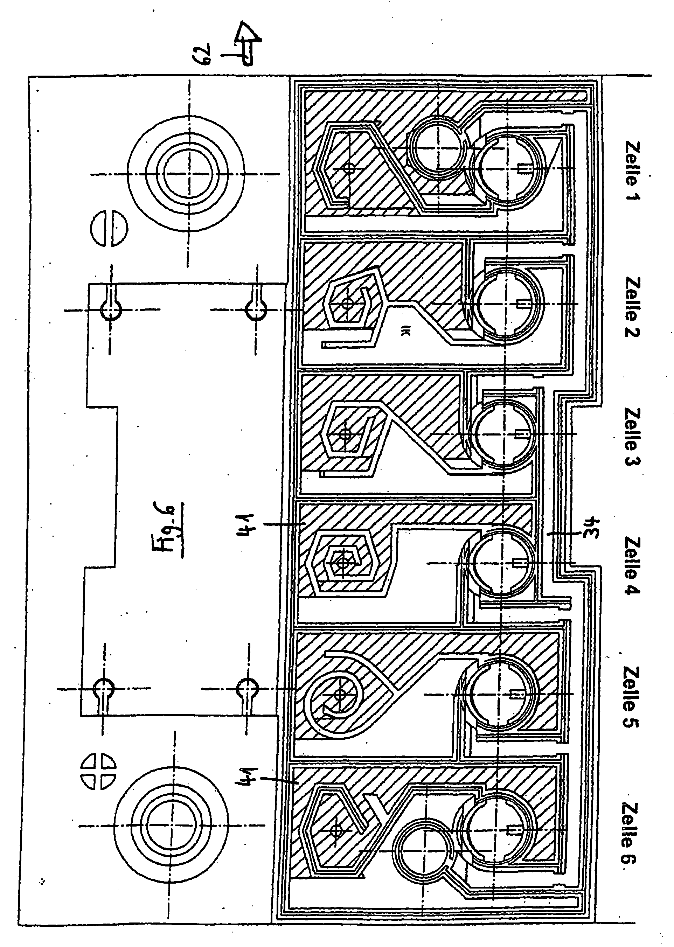

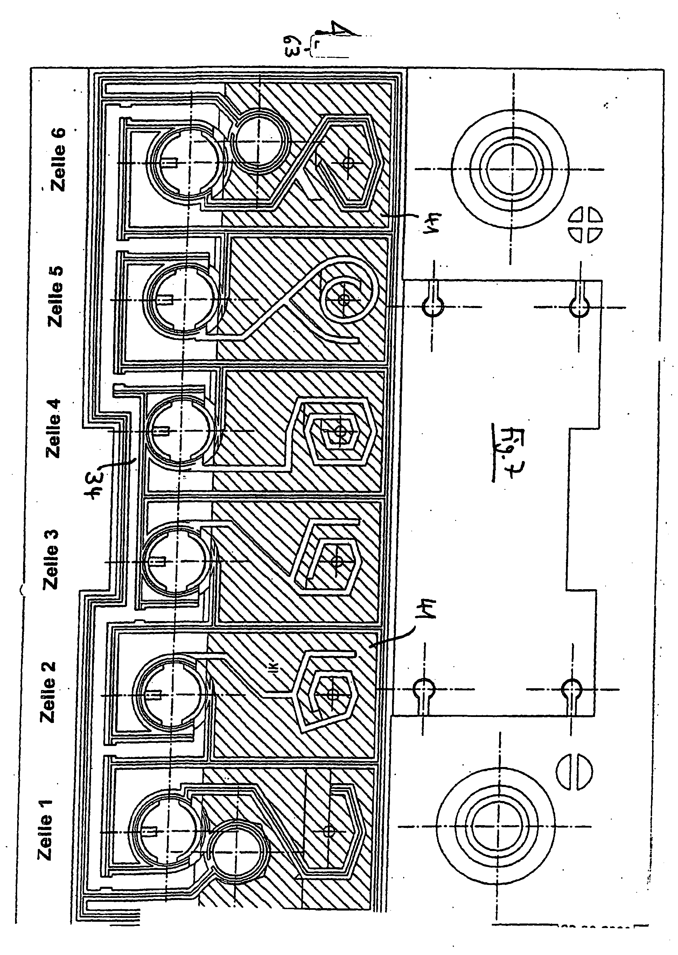

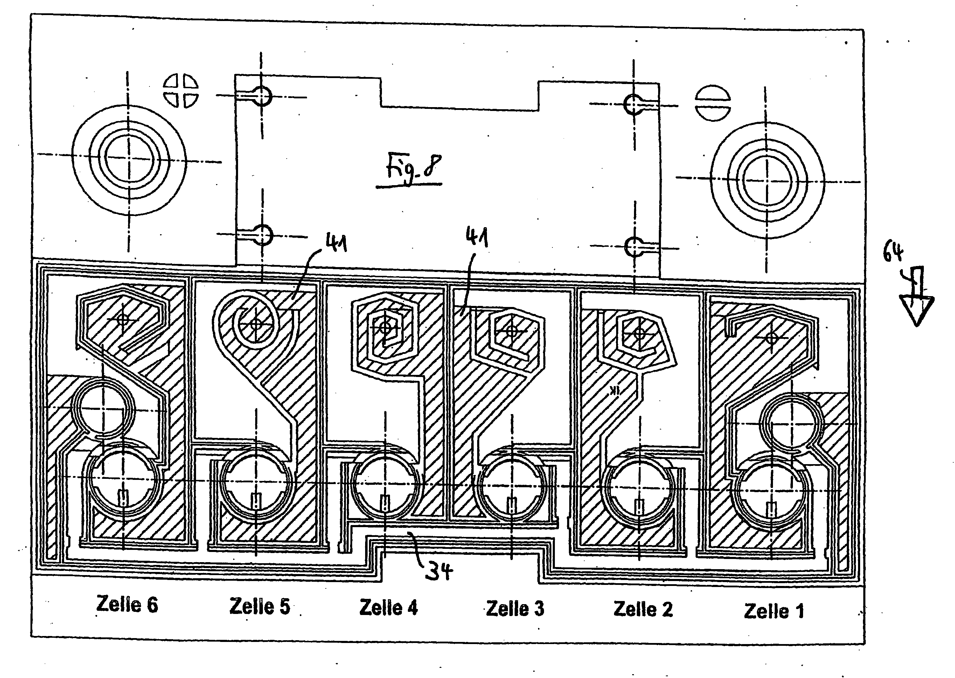

In den Figuren 5 bis 8 sind weitere Ausführungsformen für Hohlräume gezeigt. In Fig. 5 ist der Raum, den die Säure 41 bei einer Kippung des Akkumulators nach links, also in Richtung des Pfeils 61, einnimmt, schraffiert gezeichnet. Fig. 6 zeigt die entsprechenden Verhältnisse bei einer Kippung des Akkumulators nach rechts, also in Richtung des Pfeils 62, Fig. 7 bei einer Kippung des Akkumulators nach vorne, also in Richtung des Pfeils 63, und Fig. 8 bei einer Kippung des Akkumulators nach hinten, also in Richtung des Pfeils 64. In allen Fällen sind die Volumina der Hohlräume derart bemessen und die Wandungen in den Hohlräumen derart ausgestaltet, daß die Säure 41 zuverlässig festgehalten und insbesondere verhindert wird, daß sie in den zentralen Entgasungskanal 34 eindringt. In den Zeichnungsfiguren 1, 2 und 5 bis 8 ist für jeden Hohlraum 3 bis 8 eine andere Konfiguration der Wände 37 gezeigt. Bei tatsächlich hergestellten Batterien ist es vorteilhaft, wenn eine dieser Konfigurationen für alle sechs Hohlräume 3 - 8 verwendet wird.

Im Betrieb des Akkumulators können Säureabscheidungsgase durch die Gasaustrittsstellen 15 - 20 in die ersten Bereiche 3.1 - 8.1 der Hohlräume 3 - 8 und von dort über die Einmündungsstellen 32, die Einfüllöffnungen 9 -14, die Austrittsstellen 33 und die zweiten Bereiche 3.2 - 8.2 in den zentralen Entgasungskanal 34 gelangen, in dessen Endkammern Rückzündungsschutz-Fritten vorhanden sind**.**

Im Falle einer Kippung des Akkumulators tritt Säure durch die Gasaustrittsstellen 15 - 20 in die Hohlräume 3 - 8, wobei allerdings nicht mehr Säure aus den Zellen austreten kann, also von den jeweils zugeordneten Hohlräumen 3 - 8 aufgenommen werden kann. Wenn der Akkumulator seine Normallage wieder einnimmt, fließt die Säure durch das Gefälle der Rückläufflächen 38 zu den Gasaustrittsstellen 15 - 20 und durch diese in die Zellen zurück.

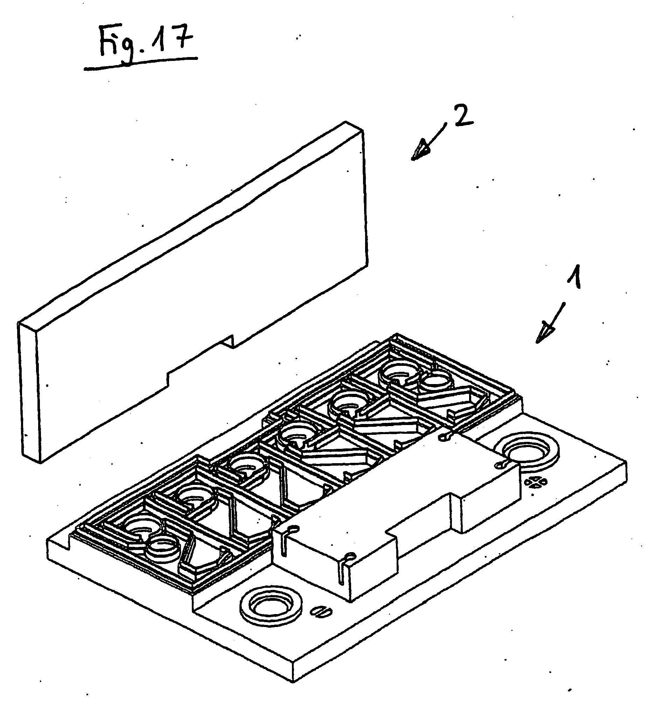

Bei dem in Fig. 17 gezeigten Ausführungsbeispiel ist der Oberdeckel 2 als ebene Platte ausgestaltet.

## Patentansprüche

1. Akkumulator, insbesondere Bleiakkumulator, mit einem mehrere Zellen umfassenden Gehäuse und einem das Gehäuse abschließenden Blockdeckel, der einen Unterdeckel (1) und einen Oberdeckel (2) umfasst, zwischen welchen ein Gasraum zur Säureabscheidung ausgebildet ist, der in mehrere Hohlräume (3-8), entsprachend der Zahl der Zellen, unterteilt ist und der mindestens eine Entgasungsöffnung aufweist, wobei in dem Unterdeckel (1) für jede Zelle eine Einfüllöffnung (9-14) und eine in den zugehörigen Hohlraum (3-8) mündende Gasaustritsstelle (15-20) im Abstand von der Einfüllöffnung (9-14) vorgesehen ist,
**dadurch gekennzeichnet, dass** die Größe der Gasaustrittsstelle (15-20) so bemessen ist, dass sich bei kurzzeitiger Kippung des Akkumulators mit zunehmendem Ausfließen der Säure aus der Zelle in dieser Zelle ein Unterdruck bildet, der mit weiterem Ausfließen der Säure größer wird und der ein weiteres Ausfließen der Säure spätestens dann verhindert, wenn der jeweilige Hohlraum (3-8) gefüllt ist, so dass nicht mehr Säure aus der Zelle austreten kann, als von dem ihr zugeordneten Hohlraum (3-8) aufgenommen wird, dass jeder Hohlraum (3-8) einen ersten Bereich (3.1-8.1) und einen zweiten Bereich (3.2-8.2) umfasst, die jeweils mit einem Bereich der Einfüllöffnung (9-14) verbunden sind,
dass die Einfüllöffnungen (9-14) durch jeweils einen Verschlussstopfen (23) verschlossen oder verschließbar sind,
dass die Verschlussstopfen (23) eine erste Dichtung (25) gegenüber dem Oberdeckel (2) und eine zweite Dichtung (27) gegenüber dem Unterdeckel (1) aufweisen,
dass zwischen den Verschlussstopfen (23) und den sie aufnehmenden Einfüllöffnungen (9-14) ein tangentialer Gas-Strömungsweg vorhanden ist,
dass der Strömungsweg als Ringraum (31) ausgestaltet ist, zwischen der ersten und zweiten Dichtung (25, 27) und
dass dass die Hohlräume (3-8) in einen zentralen Entgasungskanal (34) münden.

2. Akkumulator nach Anspruch 1, **dadurch gekennzeichnet, dass** eine Einfüllöffnung (9-14) mit einer Diagnose-Sonde versehen ist.

3. Akkumulator nach Anspruch 1 oder 2, **dadurch gekennzeichnet, dass** der Oberdeckel (2) mit dem Unterdeckel (1) unlösbar verbunden, insbesondere verschweißt ist.

4. Akkumulator nach Anspruch 1 oder 2, **dadurch gekennzeichnet, dass** der Oberdeckel (2) mit dem Unterdeckel (1) lösbar verbindbar ist, insbesondere an dem Unterdeckel (1) festgeklipst oder mit diesem verschraubt ist.

5. Akkumulator nach Anspruch 4, **dadurch gekennzeichnet, dass** der, Oberdeckel (2) mit einer elastischen Dichtkontur (21) ausgestattet ist.

6. Akkumulator nach Anspruch 4 oder 5, **dadurch gekennzeichnet, dass** der Unterdeckel (1) eine rinnenförmige Kontur zur Abdichtung des Oberdeckels (2) aufweist.

7. Akkumulator nach 1-6, **dadurch gekennzeichnet, dass** die Verschlussstopfen (23) aus 2-Komponenten-Kunststoff hergestellt sind.

8. Akkumulator nach einem der vorhergehenden Ansprüche, **dadurch gekennzeichnet, dass** die Gasaustrittsstellen (15-20) einen kreisförmigen Querschnitt aufweisen.

9. Akkumulator nach einem der vorhergehenden Ansprüche, **dadurch gekennzeichnet, dass** die Gasaustrittsstellen (15-20) trichterförmig ausgestaltet sind.

10. Akkumulator nach einem der vorhergehenden Ansprüche, **dadurch gekennzeichnet, dass** die Hohlräume (3-8) durch Wände (37) in eine oder mehrere Kammern untergliedert sind.

11. Akkumulator nach Anspruch 10, **dadurch gekennzeichnet, dass** die Kammern labyrinthartig ausgestaltet sind.

12. Akkumulator nach Anspruch 10 oder 11, **dadurch gekennzeichnet, dass** die der Gasaustrittsstelle (15-20) nächstliegende Wand derart ausgebildet ist, dass sie eine spiralförmige Kammer umgrenzt, wobei sich die Spirale vorzugsweise über 450° oder mehr erstreckt.

13. Akkumulator nach einem der Ansprüche 10 bis 12, **dadurch gekennzeichnet, dass** der Austrittsquerschnitt einer oder mehrerer Kammern genauso groß ist wie der Querschnitt der Gasaustrittsstelle (15-20).

14. Akkumulator nach einem der vorhergehenden Ansprüche, **dadurch gekennzeichnet, dass** der Unterdeckel (1) ein zur Gasaustrittsstelle (15-20) führendes Gefälle aufweist.

15. Akkumulator nach Anspruch 14, **dadurch gekennzeichnet, dass** das Gefälle kontinuierlich und/oder facettenhaft verläuft.

16. Akkumulator nach Anspruch 14 oder 15, **dadurch gekennzeichnet, dass** der Unterdeckel (1) im Bereich des Gefälles eine Oberflächenstruktur aufweist, die in Richtung zur Gasaustrittstelle (15-20) gerichtet ist.

17. Akkumulator nach Anspruch 1 bis 16, **dadurch gekennzeichnet, dass** eine oder beide Eüdkämmern des zentralen Entgasungskanals (34) mit einem Rückzündüngsschutz ausgestattet sind.

18. Akkumulator nach einem der vothergehenden Ansprüche, **dadurch gekennzeichnet, dass** der Oberdeckel (2) Wände (39) aufweist, die in Kopflage des Akkumulators Überlaufschwellen (40) bilden.

19. Akkumulator nach einem der vorhergehenden Ansprüche, **dadurch gekennzeichnet, dass** der Oberdeckel (2) als ebene Platte ausgestaltet ist.

## Claims

1. Battery, in particular a lead battery, having a housing which comprises a plurality of cells and a block cover which closes the housing and which comprises a lower cover (1) and an upper cover (2), between which a gas space is formed for acid separation, which space is sub-divided into a plurality of hollow spaces (3-8) in accordance with the number of cells and which has at least one gas discharge opening, a filling opening (9-14) and a gas outlet location (15-20) which opens in the associated hollow space (3-8) being provided with spacing from the filling opening (9-14) in the lower cover (1) for each cell,
**characterised in that** each gas outlet location (15-20) is of such a size that, when the battery is tilted for a short time with an increasing flow of acid out of the cell, a reduced pressure is formed **in that** cell and becomes greater as the acid continues to flow out and prevents the acid from continuing to flow out at the latest when the respective hollow space (3-8) is full so that not more acid can be discharged from the cell than is received by the hollow space (3-8) which is associated therewith, and **in that** each hollow space (3-8) comprises a first region (3.1-8.1) and a second region (3.2-8.2) which are each connected to.a region of the filling opening (9-14), that the filling openings (9-14) are closed or can be closed in each case by means of a closure stopper (23), that the closure stoppers (23) have a first seal (25) relative to the upper cover (2) and a second seal (27) relative to the lower cover (1), that a tangential gas flow path is provided between the closure stoppers (23) and the filling openings (9-14) which receive the closure stoppers, that the flow path is constructed as an annular space (31), in particular between the first and second seal (25, 27) and that the hollow spaces (3-8) open in a central gas discharge channel (34).

2. Battery according to claim 1, **characterised in that** a filling opening (9-14) is provided with a diagnostic sensor.

3. Battery according to claim 1 or 2, **characterised in that** the upper cover (2) is connected in a non-releasable manner, in particular welded, to the lower cover (1).

4. Battery according to claim 1 or 2, **characterised in that** the upper cover(2) can be releasably connected to the lower cover (1) and is in particular securely clipped to the lower cover (1) or screwed thereto.

5. Battery according to claim 4, **characterised in that** the upper cover (2) is provided with a resilient sealing contour (21).

6. Battery according to claim 4 or 5, **characterised in that** the lower cover (1) has a groove-like contour for sealing the upper cover (2).

7. Battery according to any one of the preceding claims, **characterised in that** the closure stoppers (23) are produced from two-component plastics material.

8. Battery according to any one of the preceding claims, **characterised in that** the gas outlet locations (15-20) have a circular cross-section.

9. Battery according to any one of the preceding claims, **characterised in that** the gas outlet locations (15-20) are constructed in a funnel-like manner.

10. Battery according to anyone of the preceding claims, **characterised in that** the hollow spaces (3-8) are sub-divided into one or more chambers by means of walls (37).

11. Battery according to claim 10, **characterised in that** the chambers are constructed in a labyrinth-like manner.

12. Battery according to claim 10 or 11, **characterised in that** the wall closest to the gas outlet location (15-20) is constructed in such a manner that it defines a helical chamber, the helix preferably extending over 450° or more.

13. Battery according to anyone of claims 10 to 12, **characterised in that** the outlet cross-section of one or more chambers is as large as the cross-section of the gas outlet location (15-20).

14. Battery according to anyone of the preceding claims, **characterised in that** the lower cover (1) has an inclination which leads to the gas outlet location (15-20).

15. Battery according to claim 14, **characterised in that** the inclination extends in a continuous and/or faceted manner.

16. Battery according to claim 14 or 15, **characterised in that** the lower cover (1) has, in the region of the inclination, a surface structure which is orientated in the direction towards the gas outlet location (15-20).

17. Battery according to any one of the preceding claims, **characterised in that** one or both end chambers of the central gas discharge channel (34) are provided with a back flash protection means.

18. Battery according to any one of the preceding claims, **characterised in that** the upper cover (2) has walls (39) which form overflow barriers (40) when the battery is in the inverted state.

19. Battery according to any one of the preceding claims, **characterised in that** the upper cover (2) is constructed as a planar plate.

## Revendications

1. Batterie, en particulier batterie au plomb, avec un boîtier comprenant plusieurs éléments et un couvercle de batterie fermant le boîtier, lequel comprend un couvercle inférieur (1) et un couvercle supérieur (2) entre lesquels est formé un volume de gaz pour la séparation de l'acide, qui est divisé en plusieurs volumes creux (3-8) en correspondance du nombre des éléments et qui présente au moins une ouverture de dégazage, une ouverture de remplissage (9-14) et un point de sortie de gaz (1 5-20) débouchant dans le volume creux (3-8) adjoint a écartement de l'ouverture de remplissage (9-14) étant prévus dans le couvercle inférieur (1) pour chaque élément, **caractérisée par le fait que**
la grandeur de chaque point de sortie de gaz (15-20) est dimensionnée de telle manière que, dans le cas d'un renversement de courte durée de la batterie avec un écoulement croissant de l'acide hors de l'élément, il se forme dans cet élément une dé pression qui augmente avec un écoulement continué de l'acide et qui empêche un écoulement continué de l'acide au plus tard lorsque le volume creux (3-8) respectif est rempli, de telle sorte qu'il ne peut pas sortir plus d'acide de l'élément qu'il n'en est absorbé par le volume creux (3-8) qui lui est adjoint, et que chaque volume creux (3-8) comprend une première zone (3.1-8.1) et une seconde zone (3.2-8.2) qui sont reliées respectivement avec une zone de l'ouverture de remplissage (9-14), que les ouvertures de remplissage (9-14) sont fermées ou peuvent être fermées par respectivement un bouchon de fermeture (23), que les bouchons de fermeture (23) présentent un premier joint d'étanchéité (25) vis-à-vis du couvercle supérieur(2) et un second joint d'étanchéité (27) vis-à-vis du couvercle inférieur (1), qu'un trajet tangentiel d'écoulement de gaz est disponible entre les bouchons de fermeture (23) et les ouvertures de remplissage (9-14) qui les reçoivent, que le trajet d'écoulement est conformé en tant que volume annulaire (31), en particulier entre le premier et le second joints d'étanchéité (25, 27) et que les volumes creux (3-8) débouchent dans un canal de dégazage central (34).

2. Batterie selon la revendication 1, **caractérisée par le fait que le fait qu'**une ouverture de remplissage (9-14) est munie d'une sonde de diagnostic.

3. Batterie selon la revendication 1 ou 2, **caractérisée par le fait que** le couvercle supérieur (2) est relié de manière inséparable, en particulier soudé, au couvercle inférieur (1).

4. Batterie selon la revendication 1 ou 2, **caractérisée par le fait que** le couvercle supérieur (2) peut être relié de manière séparable au couvercle inférieur (1), en particulier est fixé par clipsage au couvercle inférieur (1) ou vissé a celui-ci.

5. Batterie selon la revendication 4, **caractérisée par le fait que** le couvercle supérieur (2) est équipé d'un contour d'étanchéité (21) élastique.

6. Batterie selon la revendication 4 ou 5, **caractérisée par le fait que** le couvercle inférieur (1) présente un contour en forme de canal pour l'étanchement du couvercle supérieur (2).

7. Batterie selon l'u ne des revendications précédentes, **caractérisée par le fait que** les bouchons de fermeture (23) sont fabriqués en une matière synthétique a 2 composants.

8. Batterie selon l'u ne des revendications précédentes, **caractérisée par le fait que** les points de sortie de gaz (15-20) présentent une section transversale de forme circulaire.

9. Batterie selon l'une des revendications précédentes, **caractérisée par le fait que** les points de sortie de gaz (15-20) sont réalisés en forme d'entonnoir.

10. Batterie selon l'une des revendications précédentes, **caractérisée par le fait que** les volumes creux (3-8) sont cloisonnés par des parois (37) en une ou plusieurs chambres.

11. Batterie selon la revendication 10, **caractérisée par le fait que** les chambres sont réalisées en forme labyrinthique.

12. Batterie selon la revendication 10 ou 11, **caractérisée par le fait que** la paroi la plus proche des points de sortie de gaz (15-20) est réalisée de telle manière qu'elle délimite une chambre en forme de spirale, la spirale s'étendant de préférence sur 450° ou plus.

13. Batterie selon l'une des revendications 10-12, **caractérisée par le fait que** la section transversale de sortie d'une ou plusieurs chambres est exactement aussi grande que la section transversale du point de sortie de gaz (15-20).

14. Batterie selon l'une des revendications précédentes, **caractérisée par le fait que** le couvercle inférieur (1) présente une pente conduisant au point de sortie de gaz (15-20).

15. Batterie selon la revendication 1A, **caractérisée par le fait que** la pente s'étend de manière continue et/ou en biseau.

16. Batterie selon la revendication 14 ou 15, **caractérisée par le fait que** le couvercle inférieur (1) présente, dans la zone de la pente, une structure de surface qui est dirigée en direction du point de sortie de gaz (15-20).

17. Batterie selon l'u ne des revendications précédentes, **caractérisée par le fait que** l'une des chambres d'extrémité, ou les deux, du canal de dégazage central (34) sont équipées d'une protection de retour d'arc.

18. Batterie selon l'une des revendications précédentes, **caractérisée par le fait que** le couvercle supérieur (2) présente des parois (39) qui forment dans la couche de tête de la batterie des barrières de trop-plein.

19. Batterie selon l'une des revendications précédentes, **caractérisée par le fait que** le couvercle supérieur (2) est conformé en tant que plaque plane.
